# EUROPÄISCHE PATENTANMELDUNG

(11) **EP 0 940 167 A2**
(43) Veröffentlichungstag der Anmeldung: **08.09.1999**
(21) Anmeldenummer: 99102634.5
(22) Anmeldetag: 12.02.1999
(51) Int. Cl.: B01D 53/74, B08B 15/00

(54) **Anlage für die Behandlung von Gegenständen in einer definierten Gasatmosphäre, deren O2-Gehalt kleiner als der von Luft ist und bei der umweltschädliche Behandlungsgase erzeugt werden**

(30) Priorität: 06.03.1998 DE 19809622
(71) Anmelder: KNAACK & JAHN GMBH, 22047 Hamburg (DE)
(72) Erfinder: Blaudszun, Bernd, 21720 Grünendeich (DE)
(74) Vertreter: Patentanwälte Hauck, Graalfs, Wehnert, Döring, Siemons

(57) **Zusammenfassung**

Anlage für die Behandlung von Gegenständen in einer definierten Gasatmosphäre, deren Sauerstoffgehalt kleiner als der von Luft ist und bei der umweltschädliches Behandlungsgase erzeugt werden, mit
- einem Gehäuse mit einer Eintrittsöffnung und einer Austriffsöffnung für die im Durchlauf durch das Gehäuse geförderten Gegenstände
- einer ersten Behandlungszone im Gehäuse, die die Eintrittsöffnung aufweist und die zur Erzeugung einer Prozeßgasatmosphäre das Behandlungsgas erzeugt, einer mit der Austrittsöffnung verbundenen zweiten Behandlungszone, die mit der ersten Behandlungszone über eine Durchtrittsöffnung für die Gegenstände verbunden ist und in der die Atmosphäre arm an Behandlungsgas und an Sauerstoff ist
- einem Kreislauf für das Prozeßgas, bei dem ein Lüfter Prozeßgas aus der ersten Behandlungszone ansaugt und über eine Filtervorrichtung schickt, die das Behandlungsgas zurückhält
- einer der Eintrittsöffnung zugeordneten ersten Schleuse, die mit dem von der Filtervorrichtung kommenden gereinigten Prozeßgas beströmt ist,
- einer in der zweiten Behandlungszone, der Durchtrittsöffnung zugeordneten zweiten Schleuse, die ebenfalls mit gereinigtem Prozeßgas beströmt ist,
- einem der Austrittsöffnung zugeordneten dritten Schleuse, die an eine Quelle für Inertgas unter Druck angeschlossen ist
- und einem in Förderrichtung der Gegenstände vor der Prozeßluftzufuhr liegenden an die erste Schleuse angeschlossenen Abluftzweig für Prozeßgas.

## Beschreibung

Die Erfindung bezieht sich auf eine Anlage für die Behandlung von Gegenstanden in einer definierten Gasatmosphäre nach dem Patentanspruch 1.

In vielen Produktionsprozessen werden zur Herstellung, Veredelung und Qualitätsverbesserung Stoffe eingesetzt, die zur besseren Handhabung mit Lösungsmittel angereichert werden. Während der Produktion verflüchtigen sich diese Teilsubstanzen und werden in der Regel der Produktionsabluft zugeführt.

Aufgrund bestehender technischer Vorschriften müssen Abluftreinigungssysteme eingesetzt werden, um die für die umweltschädlichen Produktionssubstanzen zu filtern. Es ist bekannt, hierfür Verbrennungsanlagen, Ad- und Absorptionsanlagen einzusetzen.

Die auftretenden Abluftvolumenströme sind normalerweise abhängig von der Höhe der eingesetzten Lösemittel. Aus Sicherheitsgründen sind die Abluftvolumenströme wesentlich höher als produktionsbedingt erforderlich. Dies bedeutet in jedem Einzelfall ein unökonomisch hohes Anlagenvolumen für die Reinigung der Abluft. Zum Beispiel ist beim Einsatz von brennbaren Lösemitteln die Mindestabluftmenge so zu wählen, daß wahrend der laufenden Produktion und insbesondere bei Start und Stopp der Anlage in keinem Fall ein zündfahiges Gemisch auftreten kann. Dies wird dadurch erreicht, daß die Abluftmenge derart erhöht wird, daß keine zündfähigen Konzentrationen in der Abluft auftreten können. Laut Sicherheitsvorschriften ist der Abstand zur zündfähigen Konzentration von brennbaren Substanzen in Produktionsanlagen maximal 20% unterhalb der Zündgrenze. Dies bedeutet im allgemeinen, daß aus Sicherheitsgründen mindestens das fünffache Abluftvolumen erforderlich um eine Produktionsanlage sicher betreiben zu können. Darüber hinaus ist die hohe Abluftmenge auch nach ihrer Reinigung mit Reststoffen aus der Produktion belastet.

Legt man eine Substanz der Stoftklasse III nach TA-Luft zugrunde, so ist eine maximale Konzentration von 150 mg/Nm³ nach Abluftreinigung zulässig. Dies würde bei einer Abluftmenge von z.B. 100.000 Nm³/h eine Immission von 15 kg/h bedeuten, die in die Umwelt abgegeben werden.

Es ist bekannt, bestimmte Gegenstände einem Oberflächenbehandlungsverfahren zu unterwerfen, zum Beispiel mit geeigneten Kunststoffen, die zur Aushärtung der Beschichtung UV-Energie oder Elektronenstrahlverfahren einsetzen. Bei solchen Fällen kann die Produktqualität durch Reduzierung der Sauerstoffkonzentration im Strahlungsbereich erhöht werden. Da im Bestrahlungsbereich ohnehin Zündgefahr besteht, ist die Konzentration von Sauerstoff auf einen Höchstwert zu begrenzen. Ein Beispiel einer derartigen Oberflächenbehandlung ist die Beschichtung von Glasbehältern mit einem Polymer.

Der Erfindung liegt die Aufgabe zugrunde, eine Anlage für die Behandlung von Gegenständen in einer definierten Gasatmosphäre, deren O₂-Gehalt kleiner ist als der von Luft und bei der umweltschädliche Behandlungsgase erzeugt werden, zu schaffen, die einen sicheren Produktionsbetrieb gewährleistet, nur eine geringe Umweltbelastung verursacht und wirtschaftlich betrieben werden kann.

Diese Aufgabe wird durch die Merkmale des Patentanspruchs 1 gelöst.

Bei der erfindungsgemäßen Anlage ist ein nahezu vollständig geschlossenes Gehäuse vorgesehen, das lediglich über mindestens zwei Öffnungen mit der Umgebung verbunden ist, wobei die Gegenstände über eine Öffnung in das Gehäuse hineingelangen und über eine andere aus dem Gehäuse heraus. Bei geschlossenen Behältern (Reaktoren) oder bei im Batchverfahren arbeitenden Anlagen ist es möglich, ein von der Umwelt abgeschlossenes Gasvolumen herzustellen und es auf eine gewünschte Konzentration von beliebigen gasförmigen Bestandteilen einzustellen. Bei Gegenständen hingegen die kontinuierlich gefördert durch das Gehäuse hindurchwandern, ist eine ständige Verbindung mit der Umgebung vorhanden. Da jedoch anforderungsgemäß die Sauerstoffkonzentration einen höchsten Wert nicht überschreiten darf, sind entsprechende Maßnahmen erforderlich, um den Einfluß der umgebenden Atmosphäre zu minimieren. Das Gehäuse wird im Inneren in mindestens zwei Zonen unterteilt, von denen die eine mit der Eintrittsöffnung und die andere mit der Austrittsöffnung verbunden ist. In der ersten Behandlungszone wird das Prozeßgas durch einen Anteil von Behandlungsgas gebildet, das in der ersten Zone erzeugt wird, zum Beispiel zum Beschichten bzw. Bedampfen der aufgenommenen Gegenstände, zum Beispiel mit einem geeigneten Polymer. In diesem Fall enthält das Behandlungsgas auch einen Anteil Lösemittel, damit die Beschichtung in gewünschter Weise vollzogen werden kann. Die erste Zone ist mit der zweiten Behandlungszone über eine Durchtrittsöffnung verbunden. Sie ist außerdem mit der Austrittsöffnung verbunden. In dieser Zone findet die Trocknung bzw. die Endreaktion des aufgebrachten Materials statt, beispielsweise mit Hilfe einer geeigneten Wärmequelle, oder einer UV-Bestrahlung. Alternativ kann auch eine Elektronenstrahlbehandlung vorgenommen werden. Wesentlich ist, daß zur Qualitätsverbesserung und/oder einer Vermeidung einer Entzündung in der zweiten Behandlungszone die Sauerstoftkonzentration minimal ist.

Zur Erzielung und Einhaltung der gewünschten Daten sieht die erfindungsgemäße Anlage ferner drei Schleusen vor, von denen jeweils eine der Eintritts- bzw. Austrittsöffnung zugeordnet ist und eine weitere der Durchtrittsöffnung. Erste und dritte Schleuse verhindern den Eintritt von Normalluft in die Behandlungszonen. Die zweite Schleuse verhindert den Eintritt von Prozeßluft in die zweite Behandlungszone. Die Schleusen bilden 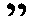 Gasvorhänge", durch die die Gegenstände hindurchlaufen. In der ersten Schleuse wird der Gasvorhang durch gereinigte Prozeßluft gebildet, ebenso wie in der zweiten Schleuse. Da in der zweiten Behandlungszone ein Inertgas zugeführt wird, geschieht dies vorzugsweise dadurch, daß die dritte Schieuse mit Inertgas beströmt wird, wodurch dafür gesorgt ist, daß in der zweiten Behandlungszone weitgehend inerte Atmosphäre herrscht. Als Inertgas kann zum Beispiel Stickstoff oder Kohlendioxid verwendet werden.

Das Prozeßgas wird aus der Behandlungszone abgesaugt und über eine Filtervorrichtung geschickt, damit schädliches Gas, beispielsweise Lösemittel, entfernt wird. Das gereinigte Prozeßgas kann dann wieder in die Behandlungszonen rückgeführt werden, etwa, wie erwähnt, über die erste und zweite Schieuse. Da durch die Inertgaszufuhr ein Überschuß an Gas im Gehäuse entsteht, sieht sich erfindungsgemäße Anlage schließlich einen Abluftzweig für Prozeßgas vor, der vorzugsweise an der ersten Schleuse angeschlossen ist in Förderrichtung vor dem Eintritt des gereinigten Prozeßgases in die Schleuse.

Bei der erfindungsgemäßen Anlage wird die für die Produktion erforderliche Atmosphäre über eine Reinigungsanlage gereinigt und das so gereinigte Prozeßgas einem geschlossenen Kreislaufsystem der Produktionsanlage zugeführt. Die an die Umgebung abgegebene Abluft ist minimal, da sie nur maximal dem Volumen entspricht das in Form von Inertgas zugeführt wird. Durch die gezielte Kapselung der Produktion und einer definierten Strömungsführung unter Nutzung der erwähnten Schleusen können Leckverluste gering gehalten werden und entsprechen einem Bruchteil der normalerweise auftretenden gereinigten Abluftmenge. Die erfindungsgemäße Anlage ist besonders dort bevorzugt verwendbar, wo bei der Kreislaufführung brennbare und chlorierte Substanzen verwendet werden.

Aufgrund der relativ gut gekapselten Produktion kann der Inertgasverbrauch gering gehalten werden. In der Produktionsatmosphäre sind keinerlei Zündvorgänge möglich da es an der entsprechenden Sauerstoffkonzentration fehlt. Der Kreislaulvolumenstrom kann auf das Maß reduziert werden, das für die Produktion erforderlich ist, ohne daß sicherheitstechnische Probleme auftreten. Bekanntlich reduziert jede Volumenstromverringerung für die Produktionsatmosphäre den anlagentechnischen Aufwand für die Reinigungssysteme, die im Prozeßkreislauf integriert sind.

Da der Prozeßgasvolumenstrom sehr gering ist, kann auch der Umfang der Filtervorrichtung entsprechend klein gewählt werden. Vorzugsweise wird als Filtervorrichtung ein Adsorber vorgesehen. Dieser kann als Filtermaterial vorzugsweise Zeolith aber auch Aktivkohle, Molekularsiebe und hydrophile Adsorbentien verwenden. Anstelle eines Festbettadsorbers können auch mit Absorbentien arbeitende Rotoren vorgesehen werden.

In vielen Fällen ist es wirtschaftlich, eine Wiedergewinnung von Prozeßstoffen vorzusehen. Erfindungsgemäß ist daher die Filtervorrichtung Teil eines Reinigungskreises zwecks Wiedergewinnung des Behandlungsgases bzw. eines Teils davon, vorzugsweise in flüssiger Form. Der Reinigungskreis kann zum Beispiel ein Kondensationskreis sein, wenn zum Beispiel flüssige Lösemittel wiedergewonnen werden sollen.

Wird als Inertgas zum Beispiel Stickstoff verwendet, das in Form von Flüssigstickstoff vorgehalten wird, was sich für den vorliegenden Fall anbietet, kann Flüssigstickstoff auch zu Kondensationszwecken eingesetzt werden indem es über einen entsprechenden Kühler geleitet wird durch den das Behandlungsgas hindurchgeführt wird. Nach einer Ausgestaltung der Erfindung weist der Kondensationskreis einen ersten Kondensatabscheider auf sowie einen Kühlkreis, der aus einem Kondensatbehälter mit Pumpe besteht sowie einem mit Flüssigstickstoff gekühlten zweiten Kühler und einem mit Kondensatkühlmittel gekühlten zweiten Abscheider. Zur besseren Energieausnutzung wird der Kondensatbehälter, in den das Kondensat aus dem Kondensationskreis geleitet wird, derart aufgeteilt, daß das von der Pumpe angeforderte zur Speisung des zweiten Abscheiders erforderliche Volumen nur einen Teil des Gesamtvolumens des Kondensatbehälters aufweist. Dadurch verringert sich die zu kühlende Menge auf das unbedingt erforderliche Maß.

Vorzugsweise sind zwei Filtereinheiten vorgeshen die abwechselnd mit der ersten Behandlungszone und der Reinigungsvorrichtung verbindbar sind. Dadurch kann der Produktionsprozeß kontinuierlich betrieben werden. Werden Adsorber eingesetzt, kann nach dem Umschalten der beladene Absorber auf Desorptionstemperatur erhitzt werden, was ebenfalls in einem geschlossenen Kreislauf erfolgen kann. Ein Teilstrom aus dem Desorptionskreislauf wird dann über den Kondensationskreis geleitet. Der Desorptionsvorgang für den beladenen Filter wird so lange durchgeführt bis die Konzentration im Filtersystem der Sättigungsbeladung bei Austritt aus der Kondensationsanlage entspricht. Anschließend wird das Filter mittels Kühlung auf Normaltemperatur gebracht und ist somit gereinigt und bereit für den nächsten Adsorptionsvorgang.

Die Erfindung wird nachfolgend anhand eines in Zeichnungen dargestellten Ausführungsbeispiels näher erläutert.
Fig. 1 zeigt ein Verfahrensschaubild einer Anlage nach der Erfindung.
Fig. 2 zeigt schematisch das Gehäuse einer Anlage nach Fig. 1.

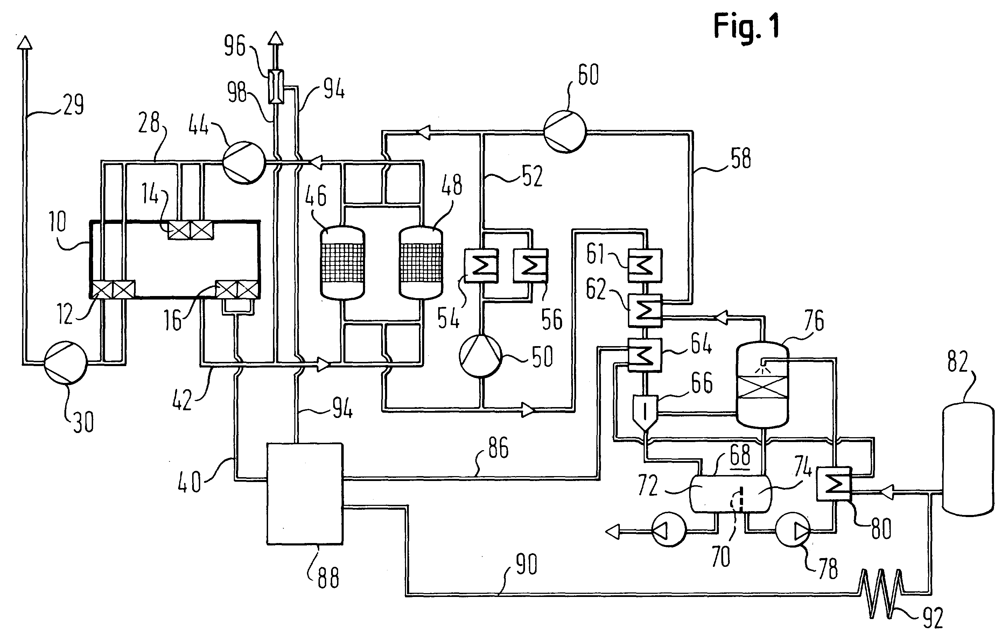

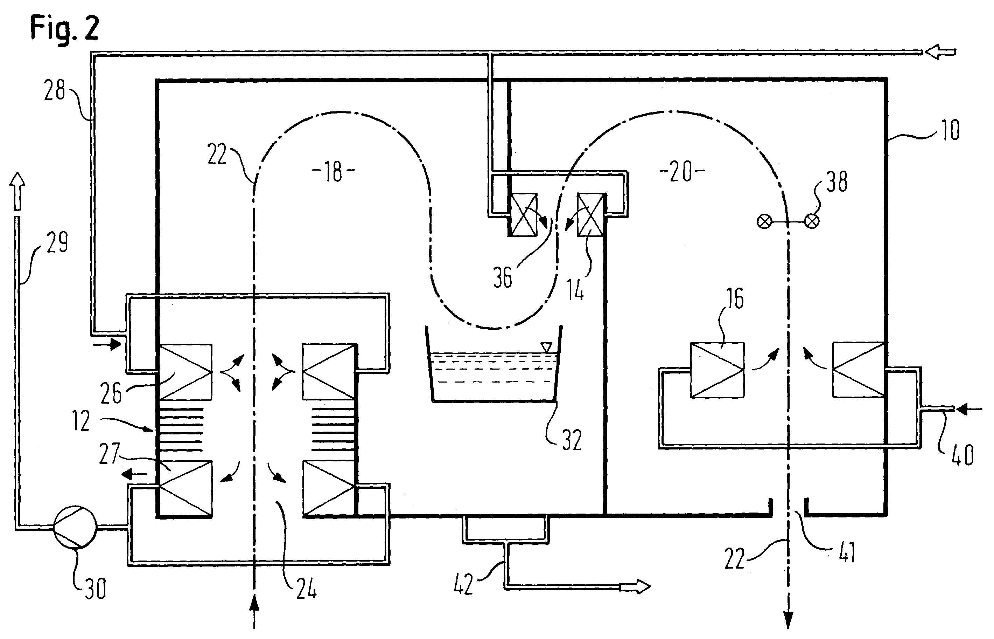

Die in den Figuren 1 und 2 dargestellten Anlagen bzw. Anlageteile dienen zum Beispiel zur Beschichtung von Glasbehältern mit einem Gemisch aus Polymer und Lösemittel, beispielsweise MEK (Butanon-2). Die Beschichtung erfolgt in einem Gehäuse 10, auf das nachfolgend noch etwas naher eingegangen wird. Im Gehäuse 10 sind drei Schleusen 12, 14 und 16 angeordnet, durch die die zu beschichtenden Behälter nacheinander hindurchgeführt werden beispielsweise mit Hilfe einer geeigneten Förderanlage. Das Gehäuse 10 ist auch in Fig. 2 angedeutet und man erkennt, daß es in eine erste Behandlungszone 18 und eine zweite Behandlungszone 20 unterteilt durch welche die Behälter sukzessiv hindurchgeführt werden. Der Pfad, an dem entlang sich die Behälter bewegen, ist durch die strichpunktierte Linie 22 angedeutet. Die Schleuse 12, der eine Eintrittsöffnung 24 für die Behälter zugeordnet ist, weist einen ersten Abschnitt 26 auf, der mit einer Leitung 28 für gereinigte Prozeßluft verbunden ist. Mit Hilfe des Abschnitts 26 wird im Durchgang für die zu beschichtenden Gegenstände ein Vorhang oder ein Schleier aus gereinigtem Prozeßgas erzeugt, der verhindert, daß Normalluft über die Eintrittsöffnung 24 in die Zone 18 gelangt. Über den besonderen Aufbau der Schleuse 12 werden nähere Ausführungen nicht gemacht, da sie im Prinzip an sich bekannt ist.

Der Schleuse 12 ist ferner ein Abschnitt 28 zugeordnet, über den Gas im Bereich der Eintrittsöffnung 24 abgesaugt wird, wie durch die Pfeile angedeutet. Dies geschieht durch einen Lüfter 30, der die abgesaugte relativ saubere Prozeßluft an die Atmosphäre abgibt.

In der Behandlungszone 18 befindet sich eine Vorrichtung 32, die die an sich bekannte Beschichtung der Glasbehälter mit einem geeigneten Polymer vornimmt, wobei ein Lösemittel zur Hilfe genommen wird.

In der Schleuse 14, die ebenfalls an die Leitung 28 angeschlossen ist, wird gereinigte Prozeßluft in die Durchtrittsöffnung 36 für die beschichteten Glasbehälter geblasen. Dadurch soll erreicht werden daß nahezu kaum Prozeßluft aus der Zone 18 in die zweite Zone 20 gelangt, in die die beschichteten Glasbehälter durch die Schleuse 14 hindurch gelangen.

In der zweiten Behandlungszone 20 werden die Behälter einer UV-Strahlung unterworfen, wie durch den UV-Strahler 38 angedeutet. Anschließend gelangen die Behälter durch die dritte Schleuse, die an eine Leitung 40 für Stickstoff angeschlossen ist. Der Stickstoff bedingt eine mit dem Inertgas angereicherte Atmosphäre in der Zone so daß eine Zündung des Lösemittels ausgeschlossen ist.

Zu Fig. 2 sei schließlich noch erwähnt daß die Zone 18 an eine Leitung 42 für beladenes Prozeßgas angeschlossen ist.

In Fig. 1 ist zu erkennen, daß in der Leitung 28 für gereinigte Prozeßluft ein Ventilator 44 angeordnet ist, der in Verbindung steht mit zwei Filtereinheiten 46, 48, die ihrerseits mit der Leitung 42 verbunden sind. Die beschriebene Anordnung stellt einen Prozeßgaskreislauf her, indem aus der Zone 18 angesaugte beladene Prozeßluft in der Filtereinheit 46 oder 48 gereinigt und anschließend wieder über die Schleusen 12 und 14 in das Gehäuse 10 zurückgeführt wird.

Die Filtereinheiten 46, 48 sind z.B. Adsorber wobei Zeolith als Adsorbens verwendet wird. Ein- und Ausgänge der Filter 46, 48 sind über einen Ventilator 50 in einer Leitung 52 miteinander verbunden, wobei in der Leitung 52 eine Parallelanordnung aus einem Erhitzer 54 und einem Kühler 56 angeordnet ist. Ventilator 50 und Erhitzer 54 dienen zur Desorption der Adsorber. Ein Teilstrom wird über eine Leitung 58 und einen weiteren Ventilator 60 geführt der gereinigte Prozeßluft enthält. Die Leitung 58 wird über Vorkühler 60, 62 und einen Kühler 64 geführt an den sich ein Tropfenabscheider 66 anschließt. Der Tropfenabscheider führt das Kondensat in einen Kondensatbehälter 68, der durch ein Wehr 70 in einen größeren Abschnitt 72 und einen kleineren Abschnitt 74 unterteilt ist. Die Prozeßluft gelangt über einen Kryo-Wäscher 76 zurück über den Vorkühler 62 zum Ventilator 60.

Der Abschnitt 74 des Kondensatbehälters 68 ist über eine Pumpe 78, einen Kühler 80 mit dem Kryo-Wäscher 76 verbunden. Ein Flüssigstickstoffbehälter 82 ist mit dem Kühler 80 verbunden sowie mit dem Kühler 64, dessen Ausgang über eine Leitung 86 mit einer Regelvorrichtung 88 für Stickstoff verbunden ist. Die Regelvorrichtung 88 ist auch über eine Leitung 90 mit dem Stickstoffbehälter 82 verbunden, und zwar über einen Luftverdampfer 92. Ein Ausgang der Regelvorrichtung 88 ist mit der Leitung 40 verbunden. Ein weiterer Ausgang ist über eine Leitung 94 mit einem Injektor 96 verbunden, und zwar zu Treibzwecken. Der Injektor steht mit einer Leitung 98 in Verbindung, die ihrerseits mit der Leitung 42 verbunden ist. Der Injektor 96 dient zum Absaugen von beladener Prozeßluft und zum Transport in die Atmosphäre.

Der Betrieb der gezeigten Anlage ist wie folgt.

Wie schon erwähnt, darf die Sauerstoffkonzentration in der zweiten Behandlungszone 20 aus Qualitäts- und Sicherheitsgründen einen Wert von 3 Vol.-% nicht übersteigen. Als Inertgas wird flüssiger Stickstoff aus dem Behälter 82 verwendet. Die erforderliche Stickstoffmenge wird durch die Regelvorrichtung 88 bereitgestellt, von der aus die Schleuse 16 versorgt wird. Es versteht daß entsprechende Sensoren vorgesehen sind, um die Sauerstoffkonzentration zu überwachen. Über die Leitung 82 wird die Prozeßatmosphäre aus der ersten Behandlungszone 18 abgesaugt und gefiltert, wobei jeweils nur eine Filtereinheit 46 oder 48 zum Einsatz gelangt. Das Adsorbat das in gasförmiger Form aus der Behandlungszone 18 abgezogen wird, wird in der Filtereinheit angelagert, und die gereinigte Luft wird über dem ,Ventilator 44 wieder zugeführt. Damit ist der Prozeßkreislauf geschlossen.

Der durch das Zugeben einer gewissen Menge an Stickstoff in das Produktionssystem entstehende Volumenüberschuß wird über die beschriebene Absaugung in der Schleuse 12 über Dach abgegeben. Da die rückgeführte Prozeßluft vom Absorbat gereinigt wurde, entspricht die austretende Konzentration dieser Abluft den gesetzlichen Vorschriften. Die Abluftmenge beträgt zum Beispiel 150 m³/h. Die Prozeßluftmenge im Kreislauf beträgt zum Beispiel 800 m³/h. Der Stickstoffverbrauch liegt zum Beispiel bei 100 m³/h. Bei herkömmlichen Verfahren wäre aus Sicherheitsgründen eine Mindestprozeßluftmenge von 3.000 m³/h erforderlich, um eine Konzentration von 20% der unteren Zündgrenze (MEK in Luft) zu erreichen. Dies bedeutet für die Abluftreinigung eine Anlage, die mindestens einen Volumenstrom von 3.000 m³/h abreinigen müßte. Die Immission der gereinigten Abluft wurde dann 150 mg/m³ . 3.000 m³/h Abluft, also 450 gMEK/h betragen. Bei der beschriebenen Anlage ist eine Reinigungsanlage mit der Kapazität von 800 m³/h ausreichend. Bei gleicher Reinigungsleistung von 150 mg/m³ und der definierten Abluftmenge von 150 m³/h ergäbe dies eine Immission von 22,5 gMEK/h.

Die beladene Filtereinheit 48 wird nach Umschalten mit Heißgas (Erhitzer 54) regeneriert und auf die Desorptionstemperatur erhitzt. Dies erfolgt ebenfalls in einem geschlossenen Kreislauf.

Ein Teilstrom aus dem Desorptionskreislauf wird dann über die bereits erwähnte Kondensationsanlage geleitet. Hierbei wird der Taupunkt des Lösemittel/Stickstoffgemisches unterschritten und es kommt zur Kondensation. Das Kondensat wird im Behälter 68 aufgefangen und kann der Produktionsanlage wieder zugeführt werden. Der Desorptionsvorgang für das beladene Filter wird so lange durchgeführt, bis die Konzentration im Filtersystem der Kondensation entspricht. Anschließend wird das Filter mittels Kühlung (Kühler 56) auf Normaltemperatur gebracht und ist somit gereinigt und bereit für den nächsten Adsorptionsvorgang.

Im vorliegenden Fall wird Flüssigstickstoff mit einer Temperatur von -196°C zur Kühlung des Kondensationsvorgangs genutzt. Hierbei wird das Kondensat auf dem Produktionsprozeß mittels flüssigem Stickstoff (Kühler 64) auf Kühlmitteltemperatur der Kondensationsanlage gekühlt und über einen speziell ausgelegten Wäscher (Kryo-Wäscher 76) direkt zur Prozeßluftkondensation des Teil-Kreislaufstromes aus der Desorption benutzt. Zur besseren Energieausnutzung wird der Teilstrom im Kondensationskreis vom hohen Temperaturniveau aus der Desorption mittels der kalten Prozeßluft (Kühler 62) nach ihrer Kondensation abgekühlt und die Restkälte aus dem Stickstoff (Kühler 64) ausgenutzt. Zusätzlich wird ein Wasserkühler 60 vorgeschaltet. Der hierbei verdampfende und sich erwärmende Stickstoff wird über die bereits beschriebene Regelvorrichtung 88 der Produktionsanlage zugeführt. In der Regel wird eine geringere Menge an Stickstoff zur Kühlung des Kondensationskreise benötigt als für die Inertgasversorgung der Produktionsanlage erforderlich ist. Daher ist der zusätzliche Luftverdampfer 92 vorgesehen, der die erforderliche Stickstoffzufuhr zur Regelvorrichtung 88 ergänzt.

Die von der Pumpe 78 angeforderte Kühlmittelmenge in Form des Kondensats im Behälter 68 wird durch den Abschnitt 74 im Behälter 68 begrenzt. Diese Begrenzung, welche durch das Überlaufwehr 70 im Behälter 68 erreicht wird, verringert die zu kühlende Lösemittelmenge auf das unbedingt Erforderliche.

Der Kondensationskreis ist so ausgelegt, daß er in der Lage ist, während des Desorptionsvorgangs die Absorbatmenge innerhalb der Regenerationszeit zu kondensieren.

Es versteht sich, daß die Anlage automatisch betrieben ist. Bei Sauerstoffeinbruch in die Produktionsanlage wird über den Injektor 96 die gesamte beladene Produktionsatmosphäre über Dach ausgeblasen. Hierbei wird ein Transvektorsystem eingesetzt, das mit Stickstoff als Treibstrahl betrieben wird. Zusätzlich wird der Produktion eine zusätzliche Menge an Stickstoff zugeführt (nicht gezeigt), um das Ansaugen von Umgebungsluft zu reduzieren und den Sauerstoffanstieg nicht weiter zu beschleunigen. Gleichzeitig wird der Behandlungsvorgang gestoppt.

Bei geringem Stickstoffbedarf unterhalb der zur Kühlung erforderlichen Menge kann der Kondensationskreis mit einer handelsüblichen Kältemaschine ausgerüstet werden.

Zur Optimierung des Adsorptionsprozesses kann die Prozeßluft vor Eintritt in das Filtersystem gekühlt werden. Hierfür kann man die Kälte des benötigen Stickstoffes ausnutzen oder eine herkömmliche Kühlung vorsehen.

Es versteht sich daß die erfindungsgemäße Anlage auch für andere Fälle eingesetzt werden kann, beispielsweise zur Beschichtung von Materialien jeglicher Art, zum Imprägnieren, zum Reinigen, für Reaktionsprozesse in der chemischen Industrie, jede Art von Lösemittelrückgewinnung, Optimierung bestehender Produktionsprozesse hinsichtlich Energiebedarf, Anlagensicherheit und Umweltschutz. Ferner kann sie eingesetzt werden für die Abluftreinigung von Produktionsprozessen, in denen organische Schadstoffe in der Abluft vorhanden sind.

## Patentansprüche

1. Anlage für die Behandlung von Gegenständen in einer definierten Gasatmosphäre, deren Sauerstoffgehalt kleiner als der von Luft ist und bei der umweltschädliches Behandlungsgase erzeugt werden, mit
- einem Gehäuse (10) mit einer Eintrittsöffnung (24) und einer Austrittsöffnung (41) für die im Durchlaufdurch das Gehäuse geforderten Gegenstände
- einer ersten Behandlungszone (18) im Gehäuse (10), die die Eintrittsöffnung (24) aufweist und die zur Erzeugung einer Prozeßgasatmosphäre das Behandlungsgas erzeugt, einer mit der Austrittsöffnung (41) verbundenen zweiten Behandlungszone (20), die mit der ersten Behandlungszone (18) über eine Durchtrittsöffnung (36) für die Gegenstände verbunden ist und in der die Atmosphäre arm an Behandlungsgas und an Sauerstoff ist
- einem Kreislauf für das Prozeßgas, bei dem ein Lüfter Prozeßgas aus der ersten Behandlungszone (18) ansaugt und über eine Filtervorrichtung (46, 48) schickt, die das Behandlungsgas zurückhält
- einer der Eintrittsöffnung (24) zugeordneten ersten Schleuse (12), die mit dem von der Filtervorrichtung (46, 48) kommenden gereinigten Prozeßgas beströmt ist,
- einer in der zweiten Behandlungszone (20), der Durchtrittsöffnung (36) zugeordneten zweiten Schleuse (14), die ebenfalls mit gereinigtem Prozeßgas beströmt ist,
- einem der Austrittsöffnung (41) zugeordneten dritten Schleuse (16), die an eine Quelle (82) für Inertgas unter Druck angeschlossen ist
- und einem in Förderrichtung der Gegenstände vor der Prozeßluftzuführ liegenden an die erste Schleuse (12) angeschlossenen Abluftzweig (29, 30) für Prozeßgas.

2. Anlage nach Anspruch 1, dadurch gekennzeichnet, daß die Filtervorrichtung (46, 48) als Adsorber arbeitet.

3. Anlage nach Anspruch 1 oder 2, dadurch gekennzeichnet, daß die Filtervorrichtung (46, 48) Teil eines Reinigungskreises ist zwecks Wiedergewinnung des Behandlungsgases, vorzugsweise in flüssiger Form.

4. Anlage nach Anspruch 3, dadurch gekennzeichnet, daß der Reinigungskreis einen Kondensationskreis enthält.

5. Anlage nach Anspruch 4, dadurch gekennzeichnet, daß als Inertgas Flüssigstickstoff verwendet wird, das in einem Reservoir (82) gelagert ist und daß das Gas im Kondensationskreis mittels eines ersten Kühlers (62) mit Flüssigstickstoff gekühlt wird.

6. Anlage nach Anspruch 5, dadurch gekennzeichnet, daß der Kondensationskreis einen ersten Kondensatabscheider (66) aufweist, ein Kühlkreis vorgesehen ist bestehend aus einem Kondensatbehälter (68), einer an den Kondensatbehälter (68) angeschlossenen Pumpe (78) und einem mit Flüssigstickstoff gekühlten zweiten Kühler (76) und einem mit Kondensatkühlmittel gekühlten zweiten Abscheider (76).

7. Anlage nach Anspruch 6, dadurch gekennzeichnet, daß der Kondensatbehälter (68) durch ein Wehr (70) in zwei Abschnitte (72, 74) unterteilt ist und nur ein Abschnitt (74) an die Pumpe (78) angeschlossen ist, während der erste Abschnitt (72) mit dem ersten Abscheider (66) verbunden ist.

8. Anlage nach einem der Ansprüche 1 bis 7, dadurch gekennzeichnet, daß eine Regelvorrichtung (88) für die Zuführ von Inertgas vorgesehen ist, die in Abhängigkeit von der Sauerstoffkonzentration in der zweiten Zone (20) gesteuert ist.

9. Anlage nach Anspruch 8, dadurch gekennzeichnet, daß eine erste Zufuhr von Inertgas zur Regelvorrichtung (88) über den Kondensationskreis und eine zweite Zufuhr (90) über einen Luftverdampfer (92) erfolgt.

10. Anlage nach Anspruch 1 und 3, dadurch gekennzeichnet, daß zwei separate Filtereinheiten (46, 48) vorgesehen sind, die abwechselnd mit der ersten Behandlungszone (18) und der Reinigungsvorrichtung verbindbar sind.

11. Anlage nach einem der Ansprüche 1 bis 10, dadurch gekennzeichnet, daß die erste Behandlungszone (18) mit einem ein Ventil enthaltenden Abblaszweig (98) verbunden ist zum Abblasen des Prozeßgases aus der ersten Behandlungszone (18) in die Atmosphäre, wenn die Sauerstoffkonzentration einen kritischen Wert erreicht.

12. Anlage nach Anspruch 11, dadurch gekennzeichnet, daß im Abblaszweig (98) ein Transvektorsystem (96) angeordnet ist mit dem Inertgas als Treibstrahl.

13. Anlage nach einem der Ansprüche 1 bis 12, gekennzeichnet durch die Anwendung auf die Behandlung von Glasbehältern mit einem Polymer.

14. Anlage nach Anspruch 13, dadurch gekennzeichnet, daß die Sauerstoffkonzentration in der zweiten Behandlungszone (20) Kleiner als 3 Vol.-% ist.

15. Anlage nach Anspruch 13 oder 14, dadurch gekennzeichnet, daß in der zweiten Behandlungszone eine UV-Bestrahlungsquelle (38) angeordnet ist.

16. Anlage nach einem der Ansprüche 2 bis 15, dadurch gekennzeichnet, daß der Absorber Zeolithe, Aktivkohle, Molekularsiebe oder hydrophile Adsorbenzien enthält.
